# DEMANDE DE BREVET EUROPEEN

(11) **EP 0 559 576 A1**
(43) Date de publication de la demande: **08.09.1993**
(21) Numéro de dépôt: 93400585.1
(22) Date de dépôt: 05.03.1993
(51) Int. Cl.: B01D 5/00, B22C 9/12

(54) **Procédé et installation pour séparer un effluent sous forme de vapeur d'un courant de gaz vecteur**

(30) Priorité: 06.03.1992 FR 9202737
(71) Demandeur: BORDEN FRANCE S.A., F-26000 Valence (FR)
(72) Inventeur: Mignot, Michel, F-76520 Montmain (FR); Geraedts, Jan, NL- 6088 CV Roggel (NL)
(74) Mandataire: Plaçais, Jean-Yves

(57) **Abrégé**

Le gaz vecteur est de l'azote, et la séparation est effectuée par condensation dans une unité de cryogénie (28) utilisant de l'azote liquide comme fluide réfrigérant. Le gaz vecteur épuré et le fluide réfrigérant réchauffé sortant de l'unité de cryogénie par des conduites respectives (43, 35) sont réunis et recyclés en tant que gaz vecteur.

Application dans le procédé BETASET de fabrication de noyaux de fonderie, dans lequel le gaz vecteur sert à amener dans un moule du formiate de méthyle à l'état de vapeur pour le durcissement d'une résine phénolique, puis à éliminer l'excédent de formiate de méthyle et les sous-produits gazeux.

## Description

L'invention concerne un procédé pour séparer un effluent sous forme de vapeur d'un courant de gaz vecteur qui l'entraîne hors d'un site réactionnel, procédé dans lequel on refroidit ledit courant de gaz vecteur chargé de l'effluent par échange thermique avec un courant d'un fluide réfrigérant qui passe de l'état liquide à l'état gazeux, et on recueille l'effluent condensé par suite du refroidissement.

Une telle séparation est utile par exemple dans le procédé BETASET de fabrication d'éléments d'outils de fonderie tels que des noyaux de fonderie. Dans ce dernier procédé, un courant de gaz vecteur amène de la vapeur de formiate de méthyle, dont le point d'ébullition à la pression atmosphérique est de 32°C, dans un moule contenant un mélange de sable et d'une résine phénolique. Le formiate de méthyle durcit la résine, et la résine durcie lie entre eux les grains de sable pour former un noyau de fonderie. Le courant de gaz vecteur entraîne ensuite hors du moule l'excédent de formiate de méthyle qui n'a pas réagi, ainsi que les sous-produits à l'état de vapeur du processus de durcissement, à savoir de l'eau et du méthanol.

Dans le procédé tel qu'utilisé jusqu'à présent, le gaz vecteur est de l'air. On a proposé récemment de séparer l'effluent du courant d'air par refroidissement et condensation, dans le but d'éviter d'une part la perte du formiate de méthyle n'ayant pas réagi, d'autre part la pollution de l'atmosphère par ce même réactif.

Le but de l'invention est d'améliorer encore le bilan économique et les conditions d'hygiène et de sécurité du procédé.

Ce résultat est obtenu, selon l'invention, grâce à un procédé du genre défini en introduction, dans lequel le fluide réfrigérant porté à l'état gazeux par ledit échange thermique est ensuite recyclé pour constituer au moins une partie dudit courant de gaz vecteur.

Lorsque le fluide réfrigérant est de l'azote, son utilisation en tant que gaz vecteur, complétée éventuellement par un apport d'azote frais, évite de mélanger le formiate de méthyle à de l'air en tant que gaz vecteur, et élimine ainsi les risques découlant de l'inflammabilité d'un tel mélange pour une fraction de formiate comprise entre 5 et 23%.

Des caractéristiques optionnelles avantageuses de l'invention sont énoncées ci-après :
- On réunit le courant de fluide réfrigérant à l'état gazeux et le courant de gaz vecteur épuré ayant tous deux subi l'échange thermique pour recycler le courant résultant en tant que gaz vecteur. Dans ce cas, l'azote vecteur après échange thermique, et les traces de formiate de méthyle qu'il peut encore contenir, sont directement réutilisés. De plus, toute pollution par ces traces de réactif est éliminée.
- Le même courant de gaz vecteur amène un réactif gazeux dans un réacteur fermé pour participer à un processus physique ou chimique et entraîne ledit effluent hors du réacteur.
- L'effluent comprend une fraction du réactif qui n'a pas réagi.
- Ledit processus comprend le durcissement d'une résine phénolique et utilise ledit réactif comme durcisseur.
- Le réacteur contient des particules destinées à être liées par ladite résine pour former un élément d'outil de fonderie.
- Le courant de gaz vecteur sortant du réacteur est intermittent et est lissé par passage dans un réservoir tampon avant de subir l'échange thermique.
- Ledit effluent ou ledit réactif comprend du formiate de méthyle.

L'invention vise également une installation mettant en oeuvre le procédé défini ci-dessus, comprenant un échangeur thermique muni de conduites d'entrée et de sortie du courant de gaz vecteur et du courant de fluide réfrigérant, la conduite de sortie du fluide réfrigérant étant reliée à une entrée de gaz vecteur de l'installation, et des moyens pour recueillir l'effluent condensé.

Avantageusement, la conduite de sortie du courant de gaz vecteur est également reliée à ladite entrée de gaz vecteur.

L'installation peut comprendre en outre l'un au moins des éléments suivants :
- un réacteur relié d'une part à l'entrée de gaz vecteur et d'autre part à la conduite d'entrée du courant de gaz vecteur;
- un réservoir tampon de gaz vecteur interposé entre le réacteur et la conduite d'entrée du courant de gaz vecteur;
- une vanne à trois voies interposée entre le réacteur et le réservoir tampon de gaz vecteur et comportant une sortie à l'atmosphère;
- un dispositif de mélange de réactif et de gaz vecteur interposé entre l'entrée de gaz vecteur et le réacteur;
- un réservoir tampon de fluide réfrigérant à recycler interposé entre la conduite de sortie du courant de fluide réfrigérant et l'entrée de gaz vecteur.

D'autres caractéristiques et avantages de l'invention apparaîtront à l'examen de la description détaillée ci-après, et des dessins annexés, sur lesquels :
- les figures 1 et 2 représentent ensemble un schéma d'une première installation selon l'invention; et
- la figure 3 représente, en combinaison avec la figure 1, un schéma d'une seconde installation selon l'invention.

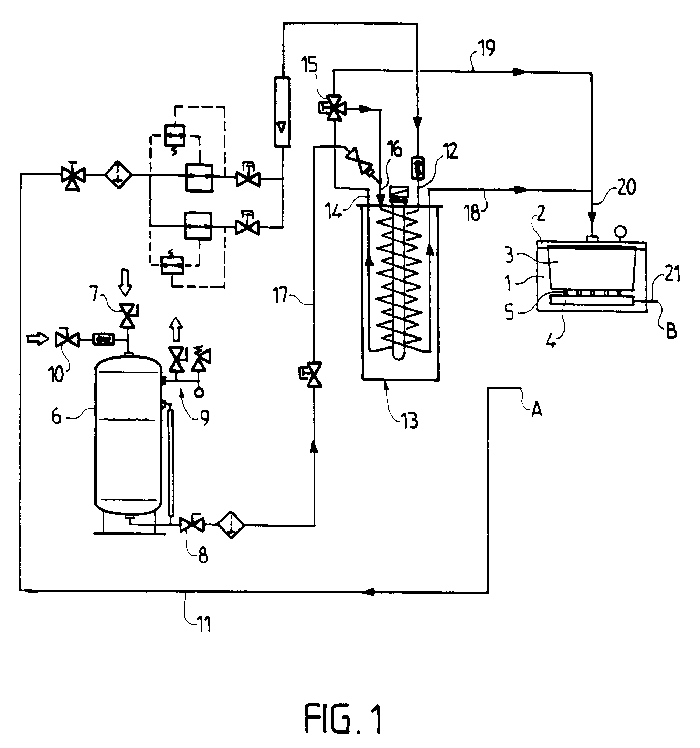

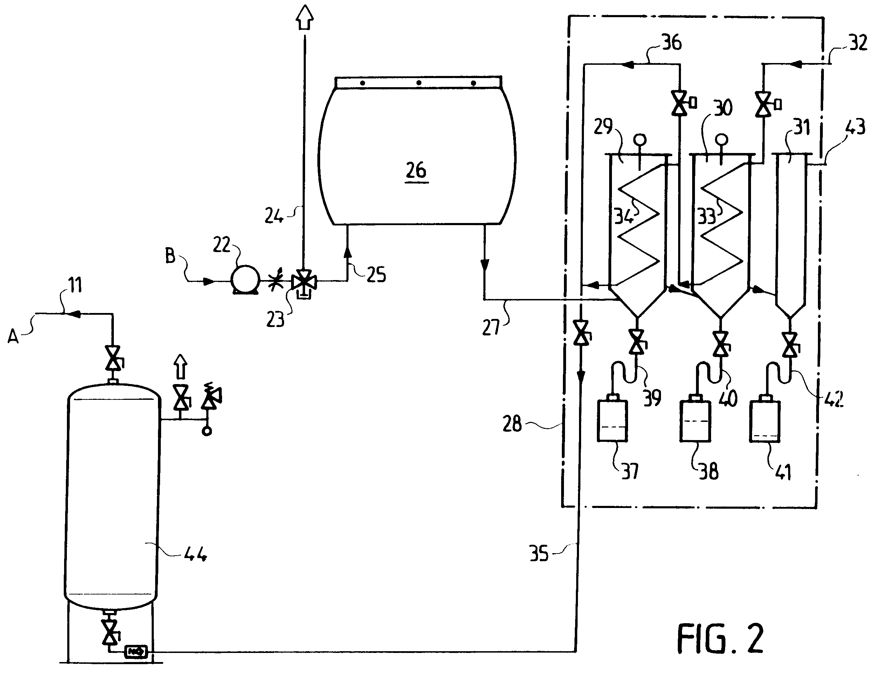

L'installation illustrée aux figures 1 et 2 est destinée à la mise en oeuvre du procédé BETASET pour la fabrication d'un noyau de fonderie. On décrit tout d'abord la figure 1 qui illustre le moule et le dispositif d'injection du formiate de méthyle dans celui-ci. Le moule, composé d'un récipient 1 et d'un couvercle 2, définit une chambre supérieure 3 remplie d'un mélange de sable et de résine phénolique à durcir et une chambre inférieure 4 communiquant avec la précédente par une série de trous 5.

Un réservoir de formiate de méthyle 6, muni d'une vanne d'alimentation 7, d'une vanne de sortie 8 et d'un évent 9, est mis sous une pression d'azote de 2 bars à travers une vanne 10. Une conduite de recyclage 11, représentée à partir d'un point de raccordement A entre les figures 1 et 2, amène un courant de gaz vecteur à une conduite d'entrée 12 d'un échangeur de chaleur 13 où il est réchauffé, et dont il ressort par une conduite 14. Une vanne à trois voies 15 sépare le courant de gaz vecteur en deux fractions dont l'une est renvoyée dans l'échangeur 13 par une conduite 16, après avoir été mélangée avec le formiate de méthyle provenant du réservoir 6 par une conduite 17. Le mélange contenant le formiate de méthyle à l'état de vapeur sort à son tour de l'échangeur 13 par une conduite 18 et est réuni à la seconde fraction du courant de gaz vecteur, qui provient de la vanne 14 par une conduite 19, le mélange final pénétrant dans la chambre 3 du moule par une conduite 20. Le formiate de méthyle réagit avec la résine contenue dans la chambre 3, et la fraction de durcisseur n'ayant pas réagi, et les sous-produits gazeux de la réaction, sont entraînés par le courant de gaz vecteur dans la chambre 4, à travers les trous 5, puis hors du moule par une conduite 21.

Au-delà d'un point B de raccordement entre les figures 1 et 2, la conduite 21 amène le courant de gaz à une pompe de circulation 22, suivie d'une vanne à trois voies 23 qui peut diriger celui-ci soit vers une conduite 24 de sortie à l'atmosphère, soit vers une conduite 25 qui aboutit dans un réservoir tampon 26 à paroi souple. Ce dernier maintient constamment le gaz qui y est contenu à une pression légèrement supérieure à la pression atmosphérique. Le gaz en ressort, avec un débit régulier, par une conduite 27 qui l'amène à une unité de cryogénie 28, où le courant de gaz traverse successivement un premier échangeur thermique 29, un second échangeur thermique 30 et un dévésiculeur 31. Les échangeurs 29 et 30 sont maintenus à des températures respectives de 0°C et -80°C par un débit régulé d'azote liquide pénétrant sous une pression de 2 bars par une conduite d'entrée 32. L'azote traverse successivement l'échangeur 30 par une conduite 33 et l'échangeur 29 par une conduite 34, et ressort de l'unité 28 à l'état gazeux, par une conduite 35. En fonction du débit nécessaire pour le maintien en température de l'échangeur 29, une fraction du courant d'azote ayant traversé l'échangeur 30 rejoint directement la conduite de sortie 35 par une conduite de dérivation 36. Le formiate de méthyle, l'eau et le méthanol contenus dans le courant de gaz vecteur sont condensés dans les échangeurs 29 et 30 et sont recueillis dans des flacons 37 et 38 respectivement, par l'intermédiaire de conduites 39 et 40 raccordées à la base de ces échangeurs. Les petites quantités d'effluent qui peuvent rester dans le courant de gaz refroidi à la sortie de l'échangeur 30 se déposent sur les parois d'un trajet en chicane dans le dévésiculeur 31, et sont recueillies également dans un flacon 41 par l'intermédiaire d'une conduite 42 raccordée à la base du dévésiculeur. Le gaz vecteur débarrassé de l'effluent, sortant de l'unité de cryogénie 28 par une conduite de sortie 43, est rejeté à l'atmosphère.

L'azote gazeux sortant de l'unité 28 par la conduite 35 arrive à un réservoir tampon 44 sous une pression d'environ 1,5 bar. Ce réservoir sert de source de gaz vecteur. Il constitue le point de départ de la conduite de recyclage 11 sur laquelle se trouve le point de raccordement A. Si le débit d'azote réchauffé dans l'unité de cryogénie 28 n'est pas suffisant pour former la totalité du courant de gaz vecteur, un débit complémentaire peut être injecté dans le circuit en un point compris entre la sortie de l'unité 28 et l'entrée de l'échangeur 13 par la conduite 12, ce débit complémentaire provenant d'une source complémentaire d'azote qui peut être celle utilisée pour la mise en pression du réservoir de formiate de méthyle 6.

Le courant de gaz dans la partie du circuit correspondant à la figure 1 est intermittent. Il est interrompu lorsque le moule 1, 2 est ouvert pour en retirer le noyau précédemment produit et pour le remplir en vue de la réalisation d'un nouveau noyau. Pendant ces périodes d'ouverture, le réservoir tampon 26 ne reçoit pas de gaz et se décharge, tandis que le réservoir tampon 44 ne fournit pas de gaz et se charge. Après fermeture du moule, et lorsque la quantité voulue de formiate de méthyle a été mélangée au courant de gaz vecteur, l'envoi de réactif à partir du réservoir 6 est arrêté et le courant d'azote vecteur continue de balayer le moule pour entraîner le résidu de formiate de méthyle n'ayant pas réagi et de sous-produits. Pendant la dernière période de ce balayage, le courant de gaz vecteur peut être envoyé directement à l'atmosphère par la vanne 23 et la conduite 24, quand la concentration d'effluent est si faible que sa récupération ne se justifie plus ni du point de vue économique ni du point de vue de la protection de l'environnement. La vanne 23 peut également être ouverte vers l'atmosphère immédiatement après la fermeture du moule et le début du balayage d'azote, avant de commencer l'injection du formiate de méthyle, pour éliminer l'air contenu dans le moule.

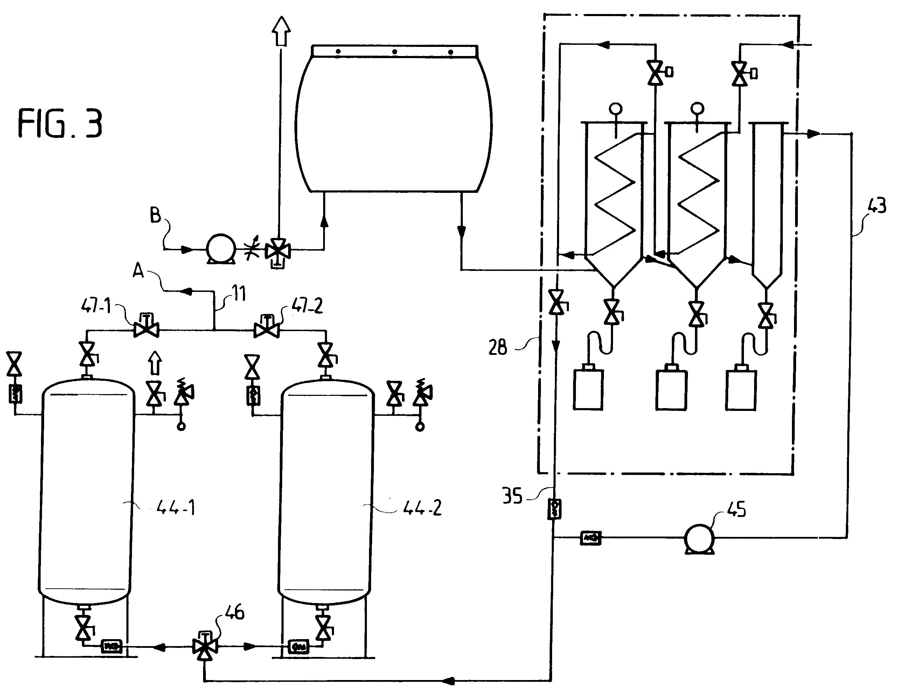

On retrouve à la figure 3 de nombreux éléments de la figure 2, qui ne seront pas décrits de nouveau. La partie de circuit représentée à la figure 3 diffère essentiellement de celle de la figure 2 en ce que la conduite 43 par laquelle le gaz vecteur épuré sort de l'unité de cryogénie 28, au lieu de déboucher à l'atmosphère, est prolongée pour se raccorder à la conduite de sortie 35 de l'azote réchauffé. Une pompe 44 est montée sur la conduite 43 pour élever la pression du gaz épuré sensiblement à la même valeur que la pression de l'azote réchauffé. Le réservoir tampon 44 est remplacé par deux réservoirs 44-1 et 44-2 qui sont montés en parallèle au moyen d'une vanne d'entrée à trois voies 46 et de deux vannes de sortie respectives 47-1 et 47-2.

Dans cette variante, l'azote ayant servi de gaz vecteur est recyclé et n'est donc pas perdu. De plus, en cas d'incident de fonctionnement de l'unité de cryogénie, l'effluent non traité n'est pas rejeté dans l'atmosphère mais recyclé de façon à être traité lors d'un nouveau passage.

## Revendications

1. Procédé pour séparer un effluent sous forme de vapeur d'un courant de gaz vecteur qui l'entraîne hors d'un site réactionnel (3), procédé dans lequel on refroidit ledit courant de gaz vecteur chargé de l'effluent par échange thermique avec un courant d'un fluide réfrigérant (33, 34) qui passe de l'état liquide à l'état gazeux, et on recueille l'effluent condensé par suite du refroidissement, caractérisé en ce que le fluide réfrigérant porté à l'état gazeux par ledit échange thermique est ensuite recyclé pour constituer au moins une partie dudit courant de gaz vecteur.

2. Procédé selon la revendication 1, caractérisé en ce qu'on réunit le courant de fluide réfrigérant à l'état gazeux (35) et le courant de gaz vecteur épuré (43) ayant tous deux subi l'échange thermique pour recycler le courant résultant (11) en tant que gaz vecteur.

3. Procédé selon l'une des revendications 1 et 2, caractérisé en ce que le fluide réfrigérant est de l'azote.

4. Procédé selon l'une des revendications précédentes, caractérisé en ce que le même courant de gaz vecteur amène un réactif gazeux dans un réacteur fermé (1, 2) pour participer à un processus physique ou chimique et entraîne ledit effluent hors du réacteur.

5. Procédé selon la revendication 4, caractérisé en ce que l'effluent comprend une fraction du réactif qui n'a pas réagi.

6. Procédé selon l'une des revendications 4 et 5, caractérisé en ce que ledit processus comprend le durcissement d'une résine phénolique et utilise ledit réactif comme durcisseur.

7. Procédé selon la revendication 6, caractérisé en ce que le réacteur contient des particules destinées à être liées par ladite résine pour former un élément d'outil de fonderie.

8. Procédé selon l'une des revendications 4 à 7, caractérisé en ce que le courant de gaz vecteur sortant du réacteur est intermittent et est lissé par passage dans un réservoir tampon (26) avant de subir l'échange thermique.

9. Procédé selon l'une des revendications précédentes, caractérisé en ce que ledit effluent ou ledit réactif comprend du formiate de méthyle.

10. Installation mettant en oeuvre le procédé selon l'une des revendications précédente, comprenant un échangeur thermique (28) muni de conduites d'entrée (27, 32) et de sortie (43, 35) du courant de gaz vecteur et du courant de fluide réfrigérant, la conduite de sortie (35) du fluide réfrigérant étant reliée à une entrée (11, 12) de gaz vecteur de l'installation, et des moyens (37-42) pour recueillir l'effluent condensé.

11. Installation selon la revendication 10, caractérisée en ce que la conduite de sortie (43) du courant de gaz vecteur est également reliée à ladite entrée (11, 12) de gaz vecteur.

12. Installation selon l'une des revendications 10 et 11, caractérisé en ce qu'elle comprend en outre l'un au moins des éléments suivants :
- un réacteur (1, 2) relié d'une part à l'entrée (11, 12) de gaz vecteur et d'autre part à la conduite d'entrée (27) du courant de gaz vecteur;
- un réservoir tampon (26) de gaz vecteur interposé entre le réacteur et la conduite d'entrée du courant de gaz vecteur;
- une vanne à trois voies (23) interposée entre le réacteur et le réservoir tampon de gaz vecteur et comportant une sortie (24) à l'atmosphère;
- un dispositif (13, 17) de mélange de réactif et de gaz vecteur interposé entre l'entrée de gaz vecteur et le réacteur;
- un réservoir tampon (44) de fluide réfrigérant à recycler interposé entre la conduite de sortie du courant de fluide réfrigérant et l'entrée de gaz vecteur.
